# EUROPEAN PATENT APPLICATION

(11) **EP 4 163 206 A1**
(43) Date of publication of application: **12.04.2023**
(21) Application number: 21201001.1
(22) Date of filing: 05.10.2021
(51) Int. Cl.: B64D 9/00, B65D 88/14, B65D 90/18

(54) **MOVABLE CARGO PLATFORM FOR BEING RECEIVED IN A CARGO HOLD OR CABIN OF AN AIRCRAFT HAVING EXTENDABLE AND STEERABLE WHEEL ASSEMBLIES**

(71) Applicant: Airbus Operations GmbH, 21129 Hamburg (DE)
(72) Inventor: Poppe, Andreas, 21129 Hamburg (DE); Benthien, Hermann, 21129 Hamburg (DE); Grabow, Thomas, 21129 Hamburg (DE); Schliwa, Ralf, 21129 Hamburg (DE); Meiranke, Dirk, 21129 Hamburg (DE)
(74) Representative: Bird & Bird LLP

(57) **Abstract**

The present invention relates to a cargo container for being received in an aircraft cargo hold (7) or cabin (5) comprising a base member (11) having an upper surface (13) configured to support cargo and a lower surface (15) adapted to face a floor surface (17) of the cargo hold (7) or cabin (5), a plurality of steerable wheel devices (19) wherein each of the plurality of steerable wheel devices (19) comprises a carrier (21) and a wheel assembly (23), each wheel assembly (23) comprising at least one wheel (25)which is rotatably supported in the carrier (21) wherein for each of the steerable wheel devices (19) a steering axis (29) is defined about which the carrier (21) may rotate relative to the base member (11), each steering axis (29) extending vertically relative to the floor surface (17), wherein the plurality of steerable wheel devices (19) includes a first group (43, 43'), said first group (43, 43') comprising a first coupling assembly (45) which is provided with a first actuator (49) having a first actuator member and couples the carriers (21) of the steerable wheel devices (19) of the first group (43, 43') such that a movement of the first actuator member in a first direction effects a rotational movement of the carrier (21) of each of the steerable wheel devices (19) of the first group (43, 43') in a first rotational direction and that a movement of the first actuator member in a second direction opposite the first direction effects a rotational movement of the carrier (21) of each of the steerable wheel devices (19) of the first group (43, 43') in a second rotational direction opposite the first direction, wherein the carrier (21) of each of the steerable wheel devices (19) is supported such that said carrier (21) is movable relative to the base member (11) parallel to the steering axis (29) of said steerable wheel device (19) between the extended position in which the at least one wheel (269 of said steerable wheel device (19) extends beyond the lower surface (15) and a retracted position in which the at least one wheel (25) of said steerable wheel device (19) is retracted behind the lower surface (15).

## Description

The present invention relates to a cargo container for being received in an aircraft cargo hold or cabin.

Such containers are known from the prior art such as the from DE 10 2020 110 598 A1. These containers comprise a preferably stiff base member having an upper surface which is adapted to receive cargo.

In this context cargo in the sense of the present invention is to be understood broadly and includes both luggage and heavy cargo elements which are usually received within the cargo hold of an aircraft. Moreover, in the present case the containers in accordance with the present invention are dimensioned such that they are capable to be passed through both the doors to the passenger cabin and the cargo hold. In particular, the term container in the sense of the present invention must not be construed in such a narrow sense so as to cover only those containers which are normally received in the cargo hold of an aircraft.

That the containers of the present invention shall also be capable of being received in the cabin of an aircraft is driven by the fact that it has recently turned out that a more flexible use of an aircraft is desirable where at least parts of the cabin can be converted into cargo space by removing the respective seats, when the complete capacity for passengers is not required. In those cases, the space in the cabin no longer required for passengers can be used for cargo so that the overall cost efficiency may still be kept at a higher level, even though a lower number of passengers are carried by the aircraft.

Since it is intended that the containers of the present invention are adapted such that they may be received both in the cargo hold and in the cabin, specific measures need to be taken to allow for the containers to be slid along the floor surface of both the cargo hold and the cabin. In particular, in case of the latter it is to be considered that the maximum pointloads which can be applied to the cabin floor are limited and much smaller than in case of the floor of the cargo hold. Furthermore, whereas normally special means are provided or are installed within the cargo hold that allow for a powered and controlled movement of the containers within the hold, this is not the case in the cabin. Hence, it is required to provide means on the base member of the containers that allow for an easy shifting of the containers on the floor surface of the cabin. In particular, it is desirable that containers may manually be shifted within the cabin. Furthermore, since the containers may have a considerable weight and have to be placed at precisely defined positions, it is also desirable that the assemblies for allowing the containers to be slidable are configured such that they also allow for the precise steering of the containers.

Therefore, it is the object of the present invention to provide a cargo container adapted to be capable of being received on floors having reduced maximum pointloads which can be applied to them without being damaged, wherein the cargo container is also capable of being manually slid over such floor surfaces in a steerable manner.

The object is achieved by a cargo container for being received in an aircraft cargo hold or cabin comprising:
a base member having an upper surface configured to support cargo and a lower surface adapted to face a floor surface of the cargo hold or cabin,
a plurality of steerable wheel devices to allow the base member to slide on the floor surface, the steerable wheel devices being arranged on the lower surface,
wherein each of the plurality of steerable wheel devices comprises a carrier and a wheel assembly, each wheel assembly comprising at least one wheel which is rotatably supported in the carrier about a wheel axis and arranged such that in an extended position of the carrier it projects beyond the lower surface,
wherein for each of the steerable wheel devices a steering axis is defined about which the carrier of said steerable wheel device my rotate relative to the base member, each steering axis extending vertically relative to the floor surface,
wherein the plurality of steerable wheel devices includes a first group of a plurality of steerable wheel devices, said first group comprising a first coupling assembly which is provided with a first actuator having a first actuator member and couples the carriers of the steerable wheel devices of the first group such that a movement of the first actuator member in a first direction effects a rotational movement of the carrier of each of the steerable wheel devices of the first group in a first rotational direction and that a movement of the first actuator member in a second direction opposite the first direction effects a rotational
movement of the carrier of each of the steerable wheel devices of the first group in a second rotational direction opposite the first direction, and
wherein the carrier of each of the steerable wheel devices is supported such that said carrier is movable relative to the base member parallel to the steering axis of said steerable wheel device between the extended position in which the at least one wheel of said steerable wheel device extends beyond the lower surface and a retracted position in which the at least one wheel of said steerable wheel device is retracted behind the lower surface.

Hence, the cargo container of the present invention comprises a base member which is provided with an upper surface so that cargo in the afore-mentioned sense, i.e., inter alia heavy cargo elements and luggage, maybe the received on the upper surface. In this connection it is to be noted that a cargo container of the present invention may comprise a housing projecting from the upper surface, the housing being either flexible or rigid. However, a cargo container in the sense of the present invention does not necessarily comprise such housing but may also be provided just with fixation means that allow for fixing the cargo on the upper surface. Therefore, the term cargo container in the sense of the present invention is to be construed broadly.

Moreover, the base member comprises a lower surface which during normal use points towards a floor surface of the cargo hold or cabin. This lower surface is provided with a plurality of steerable wheel devices, which comprise a carrier and a wheel assembly such as sole wheel or several wheels being arranged parallel to each other. In any case the wheels are rotatably supported within the carrier and are arranged on the carrier such that at least in an extended position of the carrier they project beyond the lower surface so that the wheels may contact the floor surface of the cabin or the cargo hold and allow for an easy shifting of the base member across the floor surface without the remaining parts of the base member being in direct contact therewith.

The carriers are rotatably supported within the base member so that each of the carriers may rotate about a normally vertical axis that during normal use extends vertically relative to the floor surface on which the cargo container is supported and preferably also perpendicularly to the lower surface. Thus, each of the carriers is the steerable so that the at least one wheel supported thereon may be aligned with a predetermined direction along which the cargo container shall be shifted.

In this regard it is to be noted that cargo containers of the present invention may be provided with additional wheel devices on the lower surface which are not steerable, i.e., which comprise carriers that are fixedly mounted within the base member at least in such a way that the axes of the wheels carried by the carriers are not capable of being adjusted. In particular, it is still within the scope of the present invention that the base member of the cargo containers are additionally provided with fixed wheels the position of the axis of rotation of these wheels being fixed relative to the base member.

According to the present invention a first group of the plurality of steerable wheel devices comprises a first coupling assembly which is provided with an actuator having a first actuator member and couples the carriers of the steerable wheel devices with each other in the following manner. A movement of the first actuator member in a first direction results in a rotational movement of each of the carriers of the first group in a common first rotational in the direction, i.e., each of these carriers rotate in the same sense. Similarly, when the first actuator is moved in a second direction opposite the first direction, the first coupling assembly effects that each of the carriers of the first group rotate in the second rotational direction that is opposite the first rotational direction, i.e., when the actuator is moved in the second direction, the carriers are rotated in the opposite direction compared to the case when the first actuator is moved in the first direction.

Hence, according to the present invention the base member is provided with at least one coupling assembly that is configured such that by moving a first actuator member along a certain direction each of the carriers will be a rotated in the same way so that the angular position of each of the carriers of the first group is adjusted in common.

Regarding the term "first group", it is to be noted that it is within the scope of the present invention that the first group may also encompass each of the steerable wheel devices provided in the base member, and the first group is not necessarily a subgroup of the steerable wheel devices.

Furthermore, the directions along which the first actuator member is moved to effect the rotation of the carriers of the steerable wheel devices of the first group, may be linear or rotational, i.e., the first actuator member may conduct a linear or a rotational movement so as to effect the related movement of the carriers.

Finally, the carriers of each of the steerable wheel devices are supported in the base member but in such a way that they may be shifted between the extended position and a retracted position, so that the at least one wheel of each of the steerable wheel devices does not extend beyond below the surface of the base member when the respective carrier is in its retracted position. Hence, when each of the carriers are in its retracted position, the base member will rest on a floor surface with its lower surface rather than with the wheels which prevents the base member from and being easily slit over the floor surface.

With the cargo container according to the present invention the load generated by the weight of the cargo on its base member is distributed by the plurality of wheels associated with the plurality of steerable wheel devices over a plurality of the points which minimizes the point load applied to the floor at each of these points. By means of the coupling assembly the rotational axes of the wheels of the steerable wheel devices may be commonly be adjusted which renders the cargo container of the present invention easily steerable within the cabin or the cargo hold. In particular, it is merely required to adjust the position of the first actuator so as to determine the direction along which the entire container may be moved.

In a preferred embodiment of the present invention, the plurality of steerable wheel devices includes a second group of a plurality of steerable wheel devices, said second group comprising a second coupling assembly which is provided with a second actuator having a second actuator member and couples the carriers of the steerable wheel devices of the second group such that a movement of the second actuator member in a first direction effects a rotational movement of the carrier of each of the steerable wheel devices of the second group in a first rotational direction and that a movement of the second actuator member in a second direction opposite the first direction effects a rotational movement of the carrier of each of the steerable wheel devices of the second group in a second rotational direction opposite the first direction.

In this preferred embodiment, the cargo container comprises a second group of steerable wheel devices the carriers of which are coupled by a second coupling assembly which in turn may be actuated by the second actuator member. This allows for the first and the second groups of steerable wheel devices to be adjusted separately which further facilitates manoeuvring the cargo container on the floor surface of the cargo hold and cabin, respectively. In particular, it is conceivable that the first group of steerable wheel devices encompasses the front portion of steerable wheel devices whereas in the second group the steerable wheel devices on the rear part of the base member of the cargo container are coupled with each other so as to conduct a common rotational movement.

It is to be noted, that it is also conceivable and within the scope of the present invention, that further groups of steerable wheel devices are provided, the carriers of which being commonly rotated by a respective additional coupling assembly.

In a further preferred embodiment the carrier of each of the steerable wheel devices of at least one of the first and second groups are supported in the base member such that rotation of said carrier in a first rotational direction relative to the base member effects movement of said carrier relative to the base member parallel to the steering axis of said steerable wheel device in a common first vertical direction and that rotation of said carrier in a second rotational direction relative to the base member opposite the first rotational direction effects movement of said carrier relative to the base member parallel to the steering axis of said steerable wheel device in a common second vertical direction opposite the first vertical direction.

In this preferred embodiment the carriers and, hence, the at least one wheel of each of the steerable wheel devices, of at least one of the groups are shifted between the extended and the retracted positions when the carriers are rotated relative to the base. Therefore, the coupling assemblies which primarily effect common rotation of the carriers for steering purposes can also be used to shift the carriers of each of the steerable wheel devices of the respective group between the extended and the retracted positions and an additional actuation mechanism for vertically shifting the carriers is not required.

Furthermore, it is particularly preferred when the carrier of each of the steerable wheel devices is supported in the base member by threaded engagement between the base member and said carrier such that rotation of said carrier relative to the base member in its first rotational direction results in adjustment of said carrier transverse to the lower surface in the first common vertical direction and that rotation of said carrier relative to the base member in its second rotational direction results in adjustment of said carrier transverse to the lower surface in the second common vertical direction. By means of a threaded engagement the rotational movement of the carrier is converted into the required vertical movement in a simple manner.

In another the preferred embodiment the first coupling assembly comprises a preferably endless first chain member, wherein the carrier of each of the steerable wheel devices of the first group is provided with a toothing, wherein the first chain member engages with the toothing on the carrier of each of the steerable wheel devices of the first group and wherein the first actuator is coupled to the first chain member. The positive engagement between the chain member and the toothings on the carriers ensures that the relative rotational position of the individual carriers of the steerable wheel devices of the first group cannot change.

Similarly, it is preferred when the second coupling assembly comprises a preferably endless second chain member, wherein the carrier of each of the steerable wheel devices of the second group is provided with a toothing, wherein the second chain member engages with the toothing on the carrier of each of the steerable wheel devices of the second group and wherein the second actuator is coupled to the second chain member.

For the afore-mentioned preferred embodiments employing a chain member being part of the coupling assembly it is further preferred when the first actuator comprises an electric motor the armature of which is coupled to a sprocket that engages with the first chain member and/or when the second actuator comprises an electric motor the armature of which is coupled to a sprocket that engages with the second chain member. In this embodiment the sprockets form the actuating member and by using an electric motor in the respective actuator the steering angle of the wheels of first and/or the second group of steerable wheel devices may simply electronically be adjusted.

As one alternative to chain members it is also preferred when the first coupling assembly comprises a first endless rope member, wherein the carrier of each of the steerable wheel devices of the first group is provided with a circumferential groove arranged on an outer surface of said carrier, wherein the first endless rope member is received within the groove on the carrier of each of the steerable wheel devices of the first group and wherein the first actuator is coupled to the first endless rope member. The use of a rope member for coupling the individual carriers of the first group of steerable wheel devices is a cost-effective way to couple the large number of carriers, since the mechanical means required for coupling are rather simple. It is merely necessary to provide grooves in the outer circumference of the carriers via which the carriers engage with the rope member.

Similarly, for the same reasons, it is the preferred when the second coupling assembly comprises a second endless rope member, wherein the carrier of each of the steerable wheel devices of the second group is provided with a circumferential groove arranged on an outer surface of said carrier, wherein the second endless rope member is received within the groove on the carrier of each of the steerable wheel devices of the second group and wherein the second actuator is coupled to the second endless rope member.

In case a rope member is employed in the in the first and/or second coupling assembly it is further preferred that the first actuator comprises an electric motor the armature of which is coupled to a pulley that engages with the first endless rope member and/or that the second actuator comprises an electric motor the armature of which is coupled to a pulley that engages with the second endless rope member. The pulley forms the respective actuating member and as in case of a chain members the use of an electric motor allows in a simple manner to electronically control the rotational position of the carriers of the respective groups, so that the capability of remotely steering the cargo container can simply be obtained.

Here, it is particularly preferred when the cargo container comprises a control unit wherein the first electric motors and/or the second electric motor are connected to the control unit, wherein the control unit is adapted to be capable of controlling movement of the armature of the first electric motor such that a first predetermined rotational position of the carrier of each of the steerable wheel devices of the first group is adjusted, and/or wherein the control unit is adapted to be capable of controlling movement of the armature of the second electric motor such that a second predetermined rotational position of the carrier of each of the steerable wheel devices of the second group is adjusted. With such common control unit it can be achieved that the angular positions of the carriers of the respective steerable wheel devices are synchronously adjusted.

In particular, it is preferred when the cargo container comprises a control panel having actuating elements, the control panel being connected to the control unit and configured such that the first predetermined rotational position and/or the second predetermined rotational position may be selected from a plurality of rotational positions. This will facilitate that a user electronically without significant efforts adjusts the angular position of the wheels of the steerable wheel devices. In this respect, it is to be noted, that the actuating elements can be formed by one or more rotatable element or by push buttons with which the desired angular position of the wheels of the steerable wheel devices may be selected. Hence, it is conceivable that the plurality of rotational positions is formed as a continuous range of angles or by a plurality of fixed angles, both being covered by this embodiment.

In a further preferred embodiment, as an alternative to an electronically controlled coupling assembly, the cargo container comprises an actuating rod and a drive member, which is rotatably supported in the base member and coupled to the first actuator member such that rotation of the drive member effects rotation of the first actuator member, wherein the actuating rod is connected to the drive member by a universal joint such that rotation of the actuating rod about its longitudinal axis effects rotation of the drive member and that the actuating rod may pivot relative to the base member. Since the actuating rod is coupled to the base member via the universal joint, the rod may be pivoted relative to the base member and at the same time it is possible to transfer rotational movement from the rod to the drive member which in turn is coupled to the first actuating member. Therefore, rotation of the actuating rod can be transferred into an adjustment of the angular position of the wheels of the steerable wheel devices of the first group. In particular, a user can adjust the angular position of the wheels of the first group by simply turning the actuating rod. In addition, the rod may also be used to push or pull the cargo container along the respective floor surface. This arrangement provides for a mechanically simple design of a steerable cargo container.

Finally, in order to facilitate rotation of the carriers of the steerable wheel devices about the respective steering axes, it is preferred when the wheel assembly of each steerable wheel device comprises a first and a second wheel being rotatably supported in the carrier of said steerable wheel device about its wheel axis. Such lateral arrangement of a plurality of wheels has a smaller resistance against rotation about a vertical axis which is particularly advantageous in the present case, where the base member of the cargo container may carry heavy loads.

In the following the present invention will be described with reference to a drawing which depicts merely preferred embodiments.
- Figure 1: shows an aircraft having a cabin and a cargo hold for receiving embodiments of cargo containers of the present invention;
- Figure 2: shows a cross-sectional view of an embodiment of a cargo container according to the present invention;
- Figure 3: shows a top view of the container of figure 2 with the handle in a first position and the wheels in an extended position;
- Figure 4: shows a top view of the container of figure 2 with the handle in a second position and the wheels in a retracted position;
- Figure 5: shows a schematic view of a group of steerable wheel devices to be arranged on a base member of an embodiment of a cargo container according to the present invention;
- Figure 6: shows a schematic plane view on the lower surface of the base member of an embodiment of a cargo container of the present invention;
- Figure 7: shows a perspective cross-sectional view of an embodiment of the steerable wheel device and the coupling assembly for a cargo container according to the present invention;
- Figure 8: shows a perspective top view of a group of steerable wheel devices as shown in figure 7 on a part of the base member of an embodiment of a cargo container according to the present invention;
- Figure 9: shows a schematic view of the bottom side of the base member of an embodiment of a cargo container according to the present invention combined with a schematic view of the control unit and the control panel;
- Figure 10: shows a side view of another embodiment of the steerable wheel device for a cargo container according to the present invention; and
- Figure 11: shows a schematic view of a further embodiment of the present invention.

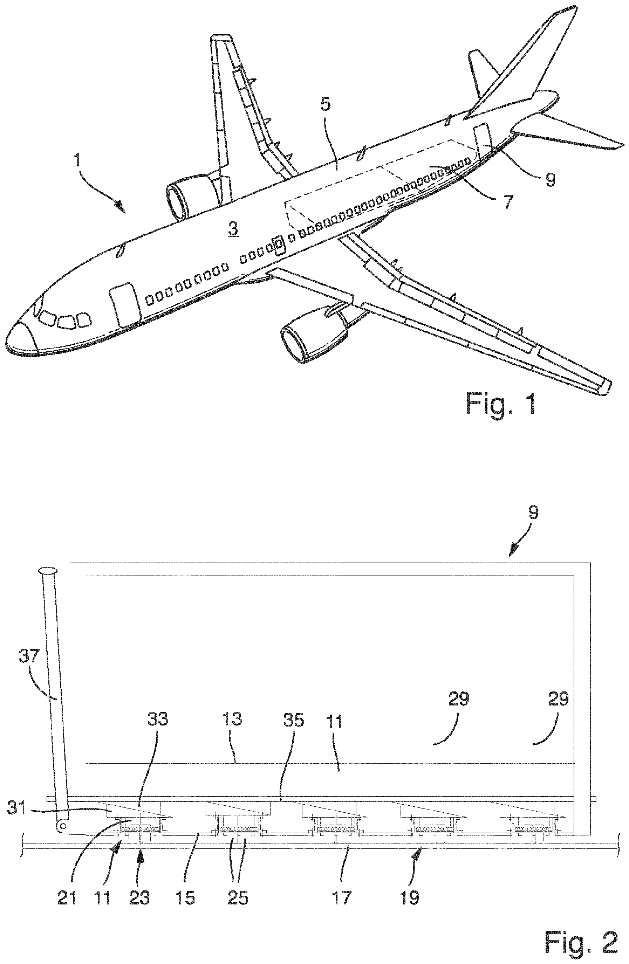

As can be seen in Figure 1 an aircraft 1 usually comprises a fuselage 3 having a passenger cabin 5 as well as a cargo hold 7 below the cabin. It is desirable that cargo containers are not only stored within the cargo hold 7 but that also the passenger cabin 5 of the aircraft 1 may be used for such purpose after having removed at least part of the seat rows in the cabin. Therefore, the embodiments of cargo containers 9 as described below will have to be dimensioned such that they are able pass both the passenger door 9 and a cargo door (not shown).

Furthermore, since at least the passenger cabin 5 is normally not provided with any means on its the floor surface to enable transport of cargo containers, it is required that these cargo containers 9 are provided with specific means so as to facilitate movement or shifting of the containers 9 along the floor surface of the passenger cabin 5 by personnel. In particular, the cargo containers 9 need to be adapted such that they may precisely be positioned adjacent to each other on the floor surface both of the passenger cabin 5 and of the cargo hold 7 which in turn requires that the containers are provided with means to allow for steering of the movement.

As can be seen in figures 2 to 4 a first embodiment of a cargo container 9 according to the present invention comprises a base member 11 having an upper surface 13 which is adapted to support cargo such as luggage or even heavy cargo elements. In this regard it is to be noted that the term cargo in the sense of the present invention is to be construed broadly so that it covers any kind of cargo elements that may be transported by an aircraft independent of its size of the weight.

In addition, the base member 11 comprises a lower surface 15 which during normal use points towards the floor surface 17 of the passenger cabin 5 or the cargo hold 7. As can further be seen in figure 2 the lower surface 15 of the base member 11 is provided with a plurality of steerable wheel devices 19 examples of which will be described in detail below and which comprise a carrier 21 and a wheel assembly 23. In the preferred embodiments described in the following the wheel assemblies 23 comprise first and second wheels 25 which are separated from each other but arranged in parallel so as to be independently rotatable with respect to a wheel axis 27. In each steerable wheel device 19 the wheel assembly 23 is mounted on the carrier 21 with the wheel axis 27 being fixed relative to the carrier 21. The carrier 21 of each of the steerable wheel devices 19 is rotatably supported in the base member 11 about a steering axis 29 which extends perpendicularly to the lower surface 15 and vertically to the floor surface 17.

As will be described below, in the each of the preferred embodiments of cargo containers 9 according to the present invention the carriers 21 are arranged in groups, and in each group the carriers 21 of each of the steerable wheel devices 19 are coupled with each other by means of a coupling assembly so that the carriers 21 are rotated synchronously and in common about their respective steering axes 29.

As can further be seen in figure 2, in this embodiment of a cargo container 9 the carriers 21 of each of the steerable wheel devices 19 are provided with a wedge member 31 which engages with a further wedge member 33 fixedly mounted on one of a plurality of parallel rods 35 that extend through the base member 11 and are coupled to a lever 37 pivotably mounted on the base member 11. By pivoting the lever 37 the rods 35 arranged in parallel are shifted so that the wedge members 33 mounted on the rods 35 slide along the wedge members 31 fixed to the carriers 21 and the carriers 21 are retracted into or pushed out of the base member 11 depending on the pivot position of the lever 37. Thus, the carriers 21 are movable between a retracted position in which the wheel 25 of the wheel assemblies 23 do not project beyond the lower surface 15 of the base member 11, and an extended position (see figure 2) where the wheels 25 of the wheel assemblies 23 project beyond the lower surface 15 and may get in contact with the respective floor surface 17.

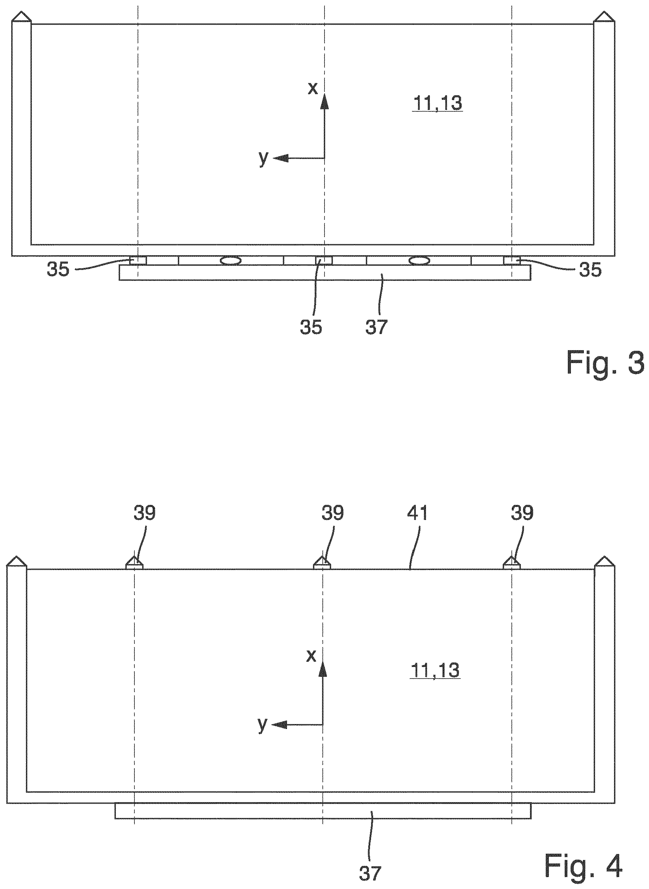

Moreover, as can be seen in figures 3 and 4, the distal end 39 of each of the rod 35 extends beyond the front end 41 of the base member 11 of the cargo container 9, when the lever 37 is pivoted towards the base member 11 into that position in which the carriers 21 are in the retracted position (see figure 4). The distal ends 39 extending beyond the front end 41 of the base member 11, may engage with recesses in an adjacent cargo container 9 something that the containers and 9 are locked with each other.

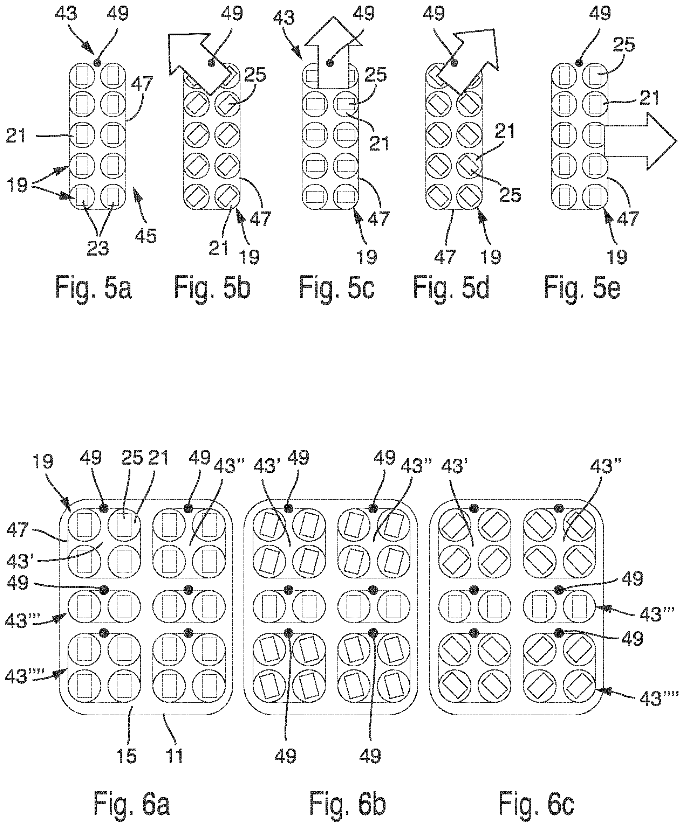

In the following the general configuration of the plurality of steerable wheel devices 19 on the lower surface 15 of the base member 11 will be discussed in detail with respect to figures 5 and 6.

As it is schematically shown in figure 5 according to the present invention a group 43 of steerable wheel devices 19 comprising a carrier 21 and a wheel assembly 23 is coupled together by means of a coupling assembly 43 examples of which will be discussed in detail below. In the example shown in figure 5, the group 43 of steerable wheel devices 19 comprises ten devices. It is conceivable though, and shown in the further embodiments, that the group of steerable wheel devices may also comprise a different number of wheel devices.

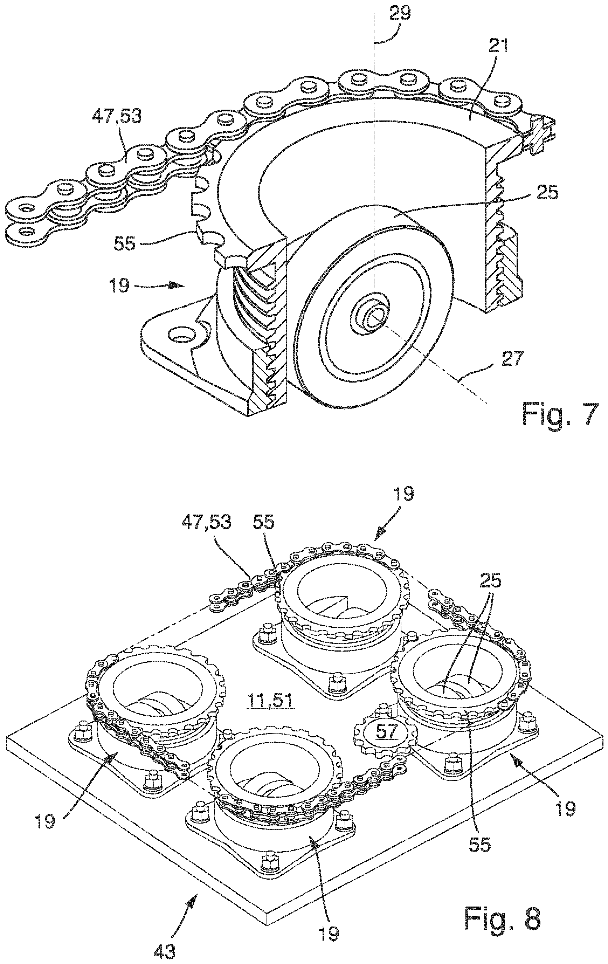

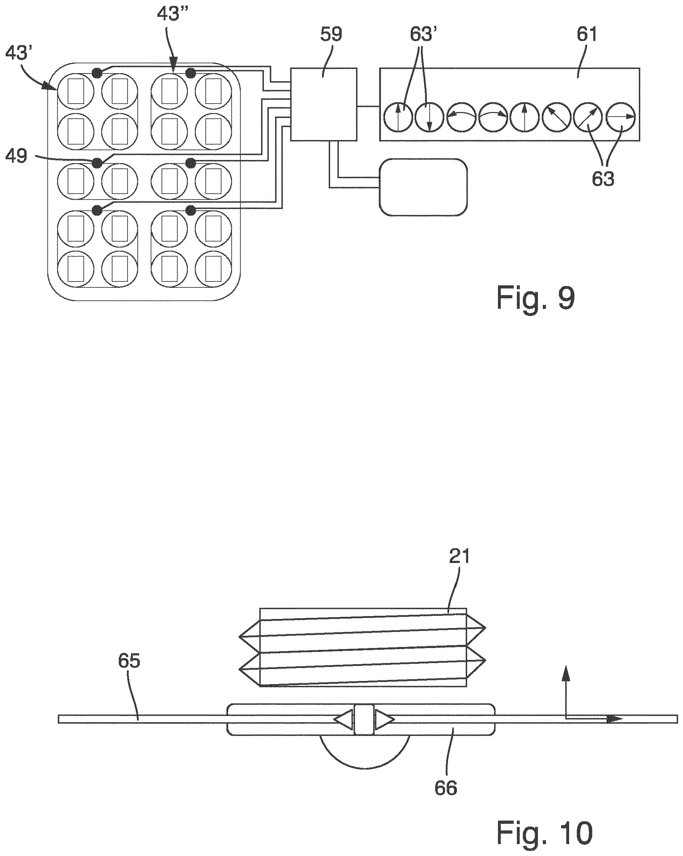

As can further be seen in figure 5, the group 43 of steerable wheel devices 19 additionally comprises a coupling assembly 45 which couples the steerable wheel devices 19, and in particular their carriers 21, in such a way with each other that a movement of the coupling assembly 45 and the actuator member of an actuator 49 results in a common rotational movement of the carriers 21 of the steerable wheel devices 19. Especially, the coupling assembly 45 comprises a coupling member 47 which in preferred embodiments is formed as a chain member or a rope member (see the figure 7 and 10) and which engages with each of the carriers 21 of the steerable wheel devices 19 of the group 43.

In addition, the coupling assembly 45 comprises an actuator 49 having an actuator member, the actuators 49 being adapted such their actuator member may conduct a movement in a first and a second direction the second direction being opposite to the first direction and which engages with the coupling member 47. In particular, the actuator member may conduct a linear or a rotational movement. However, in the preferred embodiment the actuator 49 is designed such that its actuator member carries out a rotational movement, as will be described below.

As it is shown in parts b) to e) of figure 5, when starting from the position shown in part a) the actuator member of the actuator 49 begins to rotate in a first clockwise direction so that the coupling member 47 moves also in the clockwise direction around the group 43 of steerable wheel devices 19, the angular position of each of the carriers 21 of the steerable wheel devices 19 are rotated clockwise as well so that after a certain period the carriers 21 assume the common position shown in part b) which would result in a driving direction as indicated by the arrow in that part. When the actuator member of the actuator 49 continues to move in the same direction, the coupling member 47 also continues to move clockwise so that the carriers 21 of the steerable wheel devices 19 of the group 43 are aligned in the position shown in part c) of figure 5. When the movement of the actuator member and the coupling member 47 further continues in the same direction, the positions shown in parts d) and e) are achieved. In order to return to the position shown in part a), the actuator member of the actuator 49 will be rotated counter clockwise which in turn results in a counter clockwise movement of the coupling member 47 around the group 43 of steerable wheel devices 19.

Hence, the steerable wheel devices 19 of the group 43 of steerable wheel devices 19 are coupled such that a movement of the actuator member in a first direction effects a rotational movement of the carrier 21 of each of the steerable wheel devices 19 of the group in a first rotational direction and that a movement of the actuator member in a second direction opposite the first direction effects a rotational movement of the carrier 21 of each of the steerable wheel devices 19 of the group 43 in a second rotational direction opposite the first direction.

This general principle of coupling the carriers 21 of a group 43 of steerable wheel devices 19 and the lower surface 15 of the base member 11 as shown in figure 5 is applied in the way as shown in figure 6 in an embodiment of a cargo container 9 according to the present invention.

As can be seen in part a) of the figure 6, on the lower surface 15 of the base member 11 a first group 43' and a second group 43" of steerable wheel devices 19 are provided the first and second groups 43', 43" being arranged laterally with respect to each other. In addition to the first and second groups 43', 43", further groups 43"', 43"" are provided on the lower surface 15, and these groups 43"', 43"" are configured similarly to the first and second groups 43', 43" with the exception, that centrally arranged groups 43"' comprise just two steerable wheel devices 19 whereas the other groups and in particular the first and the second group 43', 43" include four steerable wheel devices 19 which are configured as described before, i.e., each of the devices 19 comprises a carrier 21 which is rotatably supported in the base member 11 about a steering axis (not shown in figure 6) and in which a wheel assembly 23 is supported which in this preferred embodiment comprises a single wheel 25. In each group 43', 43", 43"', 43"" the steerable wheel devices 19 are coupled with each other by a coupling assembly 45 comprising a coupling member 47 which engages with each of the carriers 21 of the steerable wheel devices 19, and an actuator 49 that comprises a driven actuator member and that is configured to move the coupling member 47 in a first direction or a second direction depending on the moving direction of the actuator member.

The embodiment of a cargo container 9 according to the present invention as shown in the figure 6 can be operated as follows.

Starting from the position of the steerable wheel devices 19 of the groups 43', 43", 43"', 43 "" as shown in part a) of figure 6, the actuator members of the actuators 49 of the first and second groups 43', 43" are rotated clockwise so that the coupling members 47 of these groups rotate clockwise around the the respective groups 43', 43" and its steerable wheel devices 19, too. The actuators 49 of the centrally arranged groups 43"' are not activated so that the steerable wheel devices 19 of these groups do not change their angular position whereas the actuators 49 of the fourth groups 43"" are operated such that their actuator members are rotated counter clockwise resulting in counter clockwise movement of the coupling members 47 of these groups 43. When the actuators 49 of the respective groups 43 are operated as described before, the steerable wheel devices achieve the position as shown in part b) of figure 6, and the entire cargo container 9 can be shifted on a floor surface along an arcuate path about a center which is offset from the base member 11, as can be seen in part b). In a similar manner it can be achieved that the carriers 21 of the different groups 43', 43", 43"', 43"" of steerable wheel devices 19 are aligned such as it is shown in part c) of figure 6. In such case the cargo container 9 can be a rotated about the center of its base member 11.

Hence, the embodiment of a cargo container 9 which was described before and is provided with at least two groups 43', 43" of steerable wheel devices 19 that are coupled by means of a coupling assembly, allows to simply adjust the rotational position of the wheel assemblies 23 of the steerable wheel devices 19 so that the movement of the cargo container can be forced on port along the floor surface in a controlled manner and can precisely beat placed or positioned on that surface.

Figures 7 and 8 depict a specific embodiment of a group 43 of steerable wheel devices 19 that are mounted on a bottom plate 51 of the base member 11, wherein figure 7 shows a cross-sectional view of one of the steerable wheel devices 19, which are combined to the group 43 shown in figure 8.

Each of the steerable wheel devices 19 according to this embodiment comprises a carrier 21 that is rotatably supported in the base member 11 and its base plate 51, respectively, wherein the carrier 21 threadingly engages with a flange 53 fixed to the base plate 51 and being part of the base member 11. Thus, rotation of the carrier 21 relative to the base member 11 results in a movement of the carrier 21 along the steering axis 29 extending essentially perpendicular to the plane defined by the base member 11 perpendicular to the floor surface 17 on which the wheels 25 of the steerable wheel device 19 rest. When the carrier 21 is rotated relative to the base member in a first rotational direction than the carrier 21 is shifted such along the steering axis 29 that the wheels 25 are retracted from the lower surface 15 of the base member 11 until the carrier 21 reaches a retracted position in which the wheels 25 do not project beyond the lower surface 15. When for each of the steerable wheel devices 19 the retracted position is reached, the cargo container 9 rests with its the lower surface 15 of the base member 11 on the floor surface 17 of the cabin 5 or the cargo hold 7.

When it is started from the retracted position and the carrier 21 is rotated in a second rotational direction opposite to the first direction, the carrier 21 is shifted along the steering axis 29 towards the lower surface 15, and when the carrier 21 reaches an extended position, the wheels 25 extend beyond the lower surface 15 and are in contact with the floor surface 17 on which the cargo container 9 rests.

Thus, the carrier 21 of each of the steerable wheel devices of the group 43 is supported in the base member 11 by threaded engagement between the base member 11 and the carrier 21, so that rotation of the carrier 21 relative to the base member in the first rotational direction results in adjustment of the carrier 21 transverse to the lower surface 15 in the first common vertical direction and that rotation of the carrier 21 relative to the base member 11 in the second rotational direction results in adjustment of the carrier 21 transverse to the lower surface 21 in the second common vertical direction. Moreover, the carrier 21 supports a wheel assembly 23 comprising first and second wheels 25 which are arranged in parallel and are rotatably mounted within the carrier 21 about a wheel axis 27 extending essentially perpendicular to the steering axis 29, the wheels 25 being independently rotatable with respect to the carrier 21. When the carrier 21 with such wheel assembly 23 is rotated relative to the floor surface 17 about the steering axis 29, the resistance against such rotation is significantly reduced compared to the case where the wheel assembly 23 is formed by a sole wheel having the same width as the separate wheels 25.

The group 43 of steerable wheel devices 19 further comprises a coupling assembly 45 having a coupling member 47 in the form of an endless chain member 53, and each of the carriers 21 is provided with a toothing 53 with which the carriers 21 of the group 43 engages the chain member 51. In addition, an actuator 49 (not shown in figures 7 and 8) is supported on the base plate 51, the actuator 49 being formed as an electric motor. The armature of the motor carries a sprocket 57 so that in this embodiment the sprocket 57 forms the actuator member, and it engages with the chain member 53. Thus, when the electric motor is operated and the armature is rotationally driven in a first rotational direction, the chain member 53 is moved along a first rotational direction. When the electric motor is operated such that its armature rotates in a second rotational direction opposite the first direction, the chain member 53 also moves in the opposite direction. Hence, it can easily be seen in figure 8 that depending on the rotational direction of the sprocket 57, the carriers 21 are either clockwise or counter clockwise rotated so that with a sole actuator in the form of an electric motor both the angular position of the carriers 21 and, hence, the wheel assemblies 23 as well as the vertical position of the carriers 21 can be adjusted.

In addition, as can be seen in figure 9, the cargo containers 9 of the present invention may be provided with a control unit 59 which is supported e.g. on the base member 11 of the cargo container 9 and is connected to each of the actuators 49, e.g. in the form of an electric motor, of the respective groups 43', 43", 43"', 43"", so that the control unit 59 is capable of controlling operation of the actuators 49. Furthermore, the control unit 59 is connected to a control panel 61 also supported on the cargo container 9. The control panel 61 is provided with a plurality of actuating elements which are formed in this embodiment as push buttons 63, each of which being associated with a predetermined combination of angular positions of the carriers 21 of the steerable wheel devices 19. Thus, with the control panel 61 predetermined rotational positions of the carrier 21 of each of the steerable wheel devices 19 can be adjusted. In this embodiment, it can be chosen by means of the push buttons 63 in which angle relative to a forward direction the cargo container shall be pushed or pulled. It is also conceivable though that different concepts of choosing the steering angle of the cargo container are employed. Furthermore, it is to be noted that push buttons 63' are associated with the extended and the retracted position of the carriers 21, i.e., with these push buttons 63 it is possible to operate the actuators 49 so that the carriers 21 are moved either to the extended or the retracted position. Hence, these push buttons 63' allow the cargo container 9 to be lowered to or to be lifted from the floor surface 17 in question.

In the Figure 10 it is shown that it is also possible that the carriers 21 of the steerable wheel devices threadingly engage with the base member 11 and are rotationally driven by an actuator (not shown). The carrier 21 is coupled to the actuator by a rope member 65 that engages with a groove 66 forms on the outer circumference of the carrier 21. Hence, in this embodiment the rope member 65 is employed as the coupling member rather than a chain member. In such case, the actuator member on the actuator 49 is formed as a pulley (not shown) rather than a sprocket as in case of the previous embodiment.

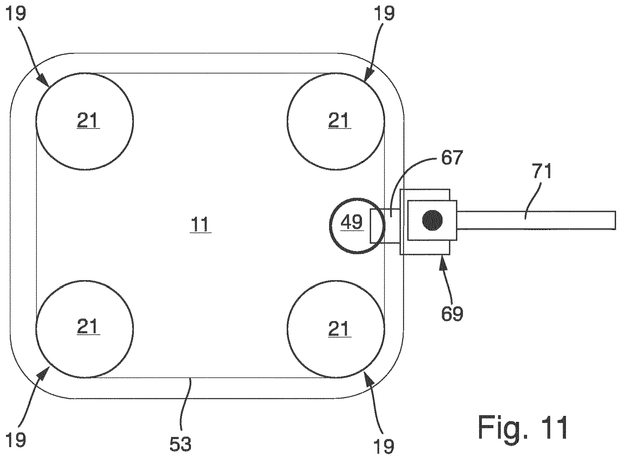

Finally, Figure 11 shows a further embodiment of the present invention. As schematically depicted, the carriers 21 of the steerable wheel devices 19 of the cargo container 9 of this embodiment are coupled with an actuating member on an actuator 49 via a chain member 53. The actuating member of the actuator 49 is coupled with a drive member 67 rotatably supported in the base member 11. The drive member 67 in turn is coupled with a universal joint 69 from which an actuating rod 71 extends. The actuating rod 71 is pivotable with respect to the base member 11 and by rotating the actuating rod 71 the angular positions of the carriers 21 of the steerable wheel devices 19 can be adjusted. Thus, this embodiment provides for a simple solution for adjusting the carriers 21 of one group of steerable wheel devices 19 the base member 11 of a cargo container 9.

With the cargo containers 9 described above the load generated by the weight of the cargo on its base member 11 is distributed by the plurality of wheels 25 associated with the plurality of steerable wheel devices 19 on a plurality of the points which minimizes the point load applied to the floor surface 17 at each of these points. By means of the coupling assembly 45 the rotational axes 27 of the wheels 25 of the steerable wheel devices 19 may commonly be adjusted which renders the cargo containers 9 easily steerable within the cabin or the cargo hold. In particular, it is merely required to adjust the position of the actuator 49 so as to determine the direction along which the entire container 9 may be moved.

### Reference numerals:

- 1: aircraft
- 3: fuselage
- 5: passenger cabin
- 7: cargo hold
- 9: cargo container
- 11: base member
- 13: upper surface
- 15: lower surface
- 17: floor surface
- 19: steerable wheel device
- 21: carrier
- 23: wheel assembly
- 25: wheel
- 27: wheel axis
- 29: steering axis
- 31: wedge member
- 33: wedge member
- 35: rod
- 37: lever
- 39: distal end
- 41: front end
- 43: group
- 43': first group
- 43": second group
- 43"': third group
- 43"": fourth group
- 45: coupling assembly
- 47: coupling member
- 49: actuator
- 51: bottom plate
- 53: chain member
- 55: toothing
- 57: sprocket
- 59: control unit
- 61: control panel
- 63: push button
- 65: rope member
- 66: groove
- 67: drive member
- 69: universal joint
- 71: actuating rod

## Claims

1. A cargo container for being received in an aircraft cargo hold (7) or cabin (5) comprising:
a base member (11) having an upper surface (13) configured to support cargo and a lower surface (15) adapted to face a floor surface (17) of the cargo hold (7) or cabin (5),
a plurality of steerable wheel devices (19) to allow the base member (11) to slide on the floor surface (17), the steerable wheel devices (19) being arranged on the lower surface (15),
wherein each of the plurality of steerable wheel devices (19) comprises a carrier (21) and a wheel assembly (23), each wheel assembly (23) comprising at least one wheel (25)which is rotatably supported in the carrier (21) about a wheel axis (27) and arranged such that in an extended position of the carrier (21) it projects beyond the lower surface (15),
wherein for each of the steerable wheel devices (19) a steering axis (29) is defined about which the carrier (21) of said steerable wheel device (19) may rotate relative to the base member (11), each steering axis (29) extending vertically relative to the floor surface (17),
wherein the plurality of steerable wheel devices (19) includes a first group (43, 43') of a plurality of steerable wheel devices (19), said first group (43, 43') comprising a first coupling assembly (45) which is provided with a first actuator (49) having a first actuator member and couples the carriers (21) of the steerable wheel devices (19) of the first group (43, 43') such
that a movement of the first actuator member in a first direction effects a rotational movement of the carrier (21) of each of the steerable wheel devices (19) of the first group (43, 43') in a first rotational direction and
that a movement of the first actuator member in a second direction opposite the first direction effects a rotational movement of the carrier (21) of each of the steerable wheel devices (19) of the first group (43, 43') in a second rotational direction opposite the first direction, and
wherein the carrier (21) of each of the steerable wheel devices (19) is supported such that said carrier (21) is movable relative to the base member (11) parallel to the steering axis (29) of said steerable wheel device (19) between
the extended position in which the at least one wheel (269 of said steerable wheel device (19) extends beyond the lower surface (15) and
a retracted position in which the at least one wheel (25) of said steerable wheel device (19) is retracted behind the lower surface (15).

2. The cargo container according to claim 1, wherein the plurality of steerable wheel devices (19) includes a second group (43") of a plurality of steerable wheel devices (19), said second group (43") comprising a second coupling assembly which is provided with a second actuator (49) having a second actuator member and couples the carriers (21) of the steerable wheel devices (19) of the second group (43") such
that a movement of the second actuator member in a first direction effects a rotational movement of the carrier (21) of each of the steerable wheel devices (19) of the second group (43") in a first rotational direction and
that a movement of the second actuator member in a second direction opposite the first direction effects a rotational movement of the carrier (21) of each of the steerable wheel devices (19) of the second group (43") in a second rotational direction opposite the first direction.

3. The cargo container according to claim 1 or 2, wherein the carrier (21) of each of the steerable wheel devices (19) of at least one of the first and second groups (43', 43") are supported in the base member (11) such that rotation of said carrier (21) in a first rotational direction relative to the base member (11) effects movement of said carrier (21) relative to the base member (11) parallel to the steering axis (29) of said steerable wheel device (19) in a common first vertical direction and
that rotation of said carrier (21) in a second rotational direction relative to the base member (11) opposite the first rotational direction effects movement of said carrier (21) relative to the base member (11) parallel to the steering axis (29) of said steerable wheel device (19) in a common second vertical direction opposite the first vertical direction.

4. The cargo container according to claim 3, wherein the carrier (21) of each of the steerable wheel devices (19) is supported in the base member (11) by threaded engagement between the base member (11) and said carrier (21) such
that rotation of said carrier (21) relative to the base member (11) in its first rotational direction results in adjustment of said carrier (21) transverse to the lower surface (15) in the first common vertical direction and
that rotation of said carrier (21) relative to the base member (11) in its second rotational direction results in adjustment of said carrier (21) transverse to the lower surface (15) in the second common vertical direction.

5. The cargo container according to one or more of the preceding claims, wherein the first coupling assembly comprises a preferably endless first chain member (53),
wherein the carrier (21) of each of the steerable wheel devices (19) of the first group (43') is provided with a toothing (55),
wherein the first chain member (53) engages with the toothing (55) on the carrier (21) of each of the steerable wheel devices (19) of the first group (43') and
wherein the first actuator member is coupled to the first chain member (53).

6. The cargo container according to one or more of claims 2 to 5, wherein the second coupling assembly comprises a preferably endless second chain member (53),
wherein the carrier (21) of each of the steerable wheel devices (19) of the second group is provided with a toothing (55),
wherein the second chain member (53) engages with the toothing (55) on the carrier (21) of each of the steerable wheel devices (19) of the second group (43") and
wherein the second actuator member is coupled to the second chain (53) member.

7. The cargo container according to claim 5 or 6, wherein the first actuator comprises an electric motor the armature of which is coupled to a sprocket (57) that engages with the first chain member (53) and/or
wherein the second actuator comprises an electric motor the armature of which is coupled to a sprocket (57) that engages with the second chain member (53).

8. The cargo container according to one or more of claims 1 to 4, wherein the first coupling assembly comprises a first endless rope member (65),
wherein the carrier (21) of each of the steerable wheel devices (19) of the first group (43, 43') is provided with a circumferential groove (66) arranged on an outer surface of said carrier (21),
wherein the first endless rope member (65) is received within the groove (66) on the carrier (21) of each of the steerable wheel devices (19) of the first group (43') and
wherein the first actuator member is coupled to the first endless rope (65) member.

9. The cargo container according to claim 2 and 8, wherein the second coupling assembly comprises a second endless rope member (65),
wherein the carrier (21) of each of the steerable wheel devices (19) of the second group (43") is provided with a circumferential groove (66) arranged on an outer surface of said carrier (21),
wherein the second endless rope member (65) is received within the groove (66) on the carrier (21) of each of the steerable wheel devices (19) of the second group (43") and
wherein the second actuator member is coupled to the second endless rope member (65).

10. The cargo container according to claim 8 or 9, wherein the first actuator comprises an electric motor the armature of which is coupled to a pulley that engages with the first endless rope member (65) and/or
wherein the second actuator comprises an electric motor the armature of which is coupled to a pulley that engages with the second endless rope member (65).

11. The cargo container according to claim 7 or 10, comprising a control unit (59)
wherein the first electric motor and/or the second electric motor are connected to the control unit (59),
wherein the control unit (59) is adapted to be capable of controlling movement of the armature of the first electric motor such that a first predetermined rotational position of the carrier (21) of each of the steerable wheel devices (19) of the first group (43') is adjusted,
and/or
wherein the control unit (59) is adapted to be capable of controlling movement of the armature of the second electric motor such that a second predetermined rotational position of the carrier (21) of each of the steerable wheel devices (19) of the second group (43") is adjusted.

12. The cargo container according to claim 11, comprising a control panel (61) having actuating elements (63), the control panel (61) being connected to the control unit (59) and configured such that the first predetermined rotational position and/or the second predetermined rotational position may be selected from a plurality of rotational positions.

13. The cargo container according to claim 5 or 8, comprising an actuating rod (71) and a drive member (67),
wherein the drive member (67) is rotatably supported in the base member (11) and coupled to the first actuator member such that rotation of the drive member (67) effects rotation of the first actuator member, and
wherein the actuating rod (71) is connected to the drive member (67) by a universal joint (69) such that rotation of the actuating rod (71) about its longitudinal axis effects rotation of the drive member (67) and that the actuating rod (71) may pivot relative to the base member (11).

14. The cargo container according to one or more of the preceding claims, wherein the wheel assembly (23) of each steerable wheel device (19) comprises a first and a second wheel (25) being rotatably supported in the carrier (21) of said steerable wheel device (19) about its wheel axis.
